(19) Europäisches Patentamt
European Patent Office
Office européen des brevets

(11) **EP 2 759 996 A1**

(12) **EUROPEAN PATENT APPLICATION**
published in accordance with Art. 153(4) EPC

(43) Date of publication:
**30.07.2014 Bulletin 2014/31**

(51) Int Cl.:
*G08G 1/16* (2006.01)        *B60R 21/00* (2006.01)
*B60R 21/01* (2006.01)

(21) Application number: **11872576.1**

(22) Date of filing: **22.09.2011**

(86) International application number:
**PCT/JP2011/071689**

(87) International publication number:
**WO 2013/042260 (28.03.2013 Gazette 2013/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventors:
• **YOSHIZAWA, Shintaro
Toyota-shi
Aichi 471-8571 (JP)**
• **KIKUCHI, Hirokazu
Toyota-shi
Aichi 471-8571 (JP)**

• **OKAMURA, Hiroki
Toyota-shi
Aichi 471-8571 (JP)**
• **YAMANISHI, Takuya
Toyota-shi
Aichi 471-8571 (JP)**
• **NGUYEN VAN, Quy Hung
Toyota-shi
Aichi 471-8571 (JP)**

(74) Representative: **Smith, Samuel Leonard
J A Kemp
14 South Square
Gray's Inn
London WC1R 5JJ (GB)**

(54) **DRIVING ASSISTANCE DEVICE**

(57)     A driving assistance apparatus includes a plurality of model candidates that define a correspondence relationship between a driving operation performed by a driver and information indicating relative positions of a moving body detected on a periphery of a host vehicle and the host vehicle. The driving assistance apparatus determines a model to be used from among the plurality of model candidates on the basis of information relating to the detected moving body (S101), and executes driving assistance (S113) on the basis of the determined model and a driving operation performed by the driver following detection of the moving body (S104). Preferably, the determined model can be updated on the basis of the determined model and the driving operation performed by the driver following detection of the moving body.

FIG. 1

**Description**

TECHNICAL FIELD

The invention relates to a driving assistance apparatus.

BACKGROUND ART

A technique of recognizing a pedestrian is available in the related art. Patent Document 1, for example, discloses a technique in which, when a pedestrian is detected from an input image captured by an infrared camera, deceleration control is performed to decelerate a vehicle speed to a predetermined speed using a brake operation or the like, and warning control is performed to issue notification of the existence of the pedestrian using a lamp, a buzzer, or a voice from a speaker.
Patent Document 1: Japanese Patent Application Publication No. 2005-196590 (JP 2005-196590 A)

SUMMARY OF THE INVENTION

Here, reactions to pedestrians vary among drivers, and therefore, when assistance is provided uniformly on the basis of information relating to a recognized pedestrian, the driver may experience a sense of discomfort. It is desirable to be able to perform driving assistance in accordance with the feelings of the driver to prevent the driver from experiencing a sense of discomfort.
An object of the invention is to provide a driving assistance apparatus that can provide driving assistance while suppressing a sense of discomfort experienced by a driver.
A driving assistance apparatus according to the invention includes a plurality of model candidates that define a correspondence relationship between a driving operation performed by a driver and information indicating relative positions of a moving body detected on a periphery of a host vehicle and the host vehicle. The driving assistance apparatus determines a model to be used from among the plurality of model candidates on the basis of information relating to the detected moving body, and executes driving assistance on the basis of the determined model and a driving operation performed by the driver following detection of the moving body.
In the driving assistance apparatus described above, preferably, the determined model can be updated on the basis of the determined model and the driving operation performed by the driver following detection of the moving body.
In the driving assistance apparatus described above, a compatibility between the determined model and the driving operation performed by the driver following detection of the moving body is preferably calculated on the basis of a predetermined number of samples of a correspondence relationship between the model and the driving operation, and when the compatibility is smaller than a set reference value, the model is preferably updated.
In the driving assistance apparatus described above, the determined model is preferably updated in accordance with both a short-term compatibility and a long-term compatibility with the driving operation performed by the driver following detection of the moving body.
In the driving assistance apparatus described above, the driving assistance is preferably based on a degree of deviation between the determined model and the driving operation performed by the driver following detection of the moving body.
The driving assistance apparatus according to the invention includes the plurality of model candidates that define the correspondence relationship between the driving operation performed by the driver and the information indicating the relative positions of the moving body detected on the periphery of the host vehicle and the host vehicle. The driving assistance apparatus determines the model to be used from among the plurality of model candidates on the basis of the information relating to the detected moving body, and executes the driving assistance on the basis of the determined model and the driving operation performed by the driver following detection of the moving body. Hence, with the driving assistance apparatus according according to the invention, driving assistance can be provided while suppressing a sense of discomfort experienced by a driver.

BRIEF DESCRIPTION OF THE DRAWINGS

[FIG. 1] FIG. 1 is a flowchart showing an operation of a driving assistance apparatus according to an embodiment.
[FIG. 2] FIG. 2 is a view showing functions of the driving assistance apparatus according to this embodiment.
[FIG. 3] FIG. 3 is a block diagram showing the driving assistance apparatus according to this embodiment.
[FIG. 4] FIG. 4 is a view showing a nervous driving model.

[FIG. 5] FIG. 5 is a view showing a standard driving model.

[FIG. 6] FIG. 6 is a view showing a relaxed driving model.

[FIG. 7] FIG. 7 is a view illustrating a predicted side passage distance.

[FIG. 8] FIG 8 is a view illustrating a deceleration rate.

[FIG. 9] FIG. 9 is a view showing a subject vehicle speed region.

[FIG. 10] FIG. 10 is a view showing an example of a decision tree relating to model selection.

[FIG. 11] FIG. 11 is a flowchart showing a model updating operation.

[FIG. 12] FIG. 12 is a view showing an example of calculation of a compatibility.

[FIG. 13] FIG. 13 is a view showing an example of a model shift performed by a model update determination unit.

[FIG. 14] FIG. 14 is a view illustrating a deviation and a degree of deviation recognition.

[FIG. 15] FIG. 15 is a view showing an example of the number of data required for a model update.

[FIG. 16] FIG. 16 is a view showing a front crossing driving model.

[FIG. 17] FIG. 17 is a view showing an example of a driving model on which the ordinate shows an operation timing.

## MODES FOR CARRYING OUT THE INVENTION

A driving assistance apparatus according to an embodiment of the invention will be described in detail below with reference to the drawings. Note that the invention is not limited to this embodiment. Further, constituent elements in the following embodiments include elements that could be replaced easily by persons skilled in the art or substantially identical elements.

[Embodiment]

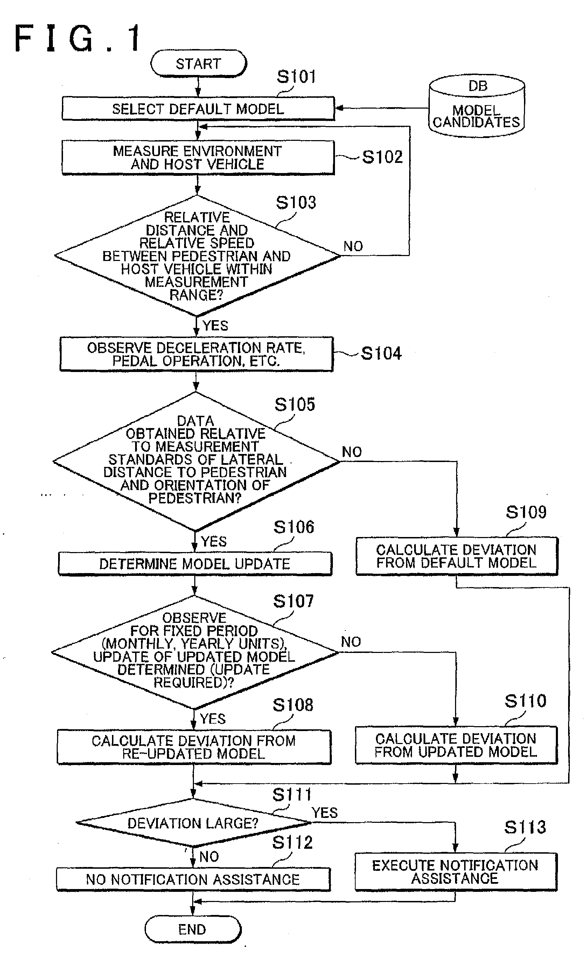

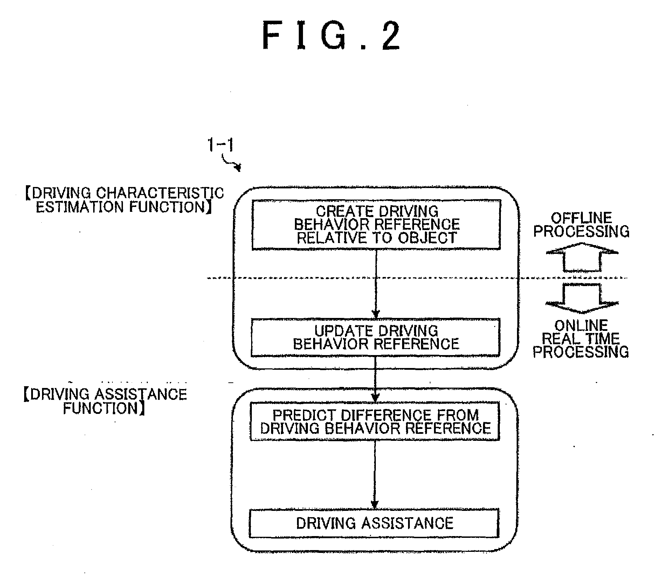

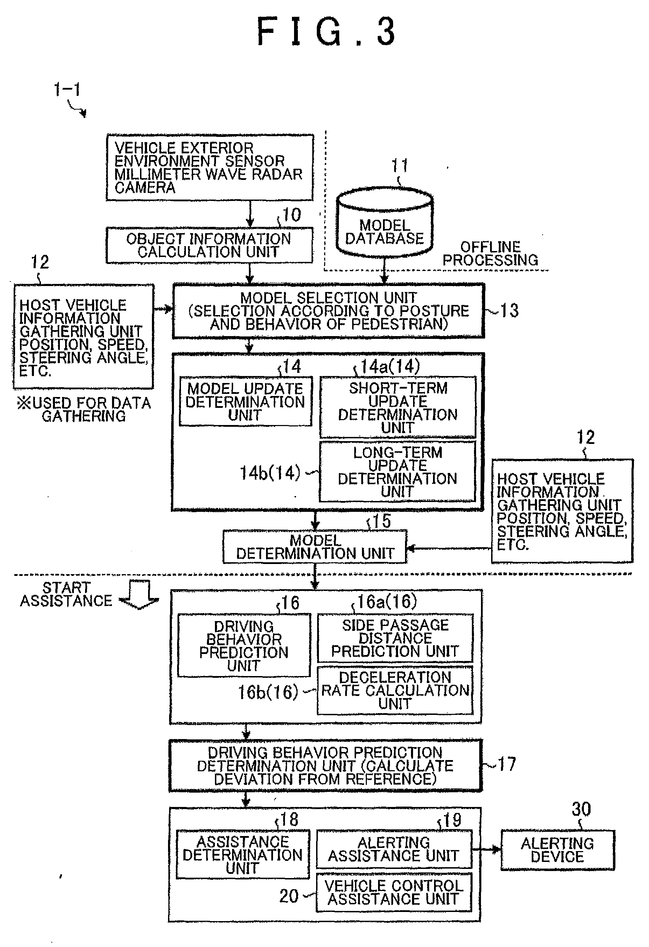

An embodiment will be described with reference to FIGS. 1 to 16. This embodiment relates to a driving assistance apparatus. FIG. 1 is a flowchart showing an operation of the driving assistance apparatus according to this embodiment, FIG. 2 is a view showing functions of the driving assistance apparatus according to this embodiment, and FIG. 3 is a block diagram showing the driving assistance apparatus according to this embodiment.

A driving assistance apparatus 1-1 according to this embodiment models a reaction of a driver to a posture and movement of a pedestrian and, using a modeling result as a reference, determines whether or not the reaction of the driver deviates from the reference. When a difference between the reaction of the driver and the modeled reference reaction is large, or when the difference is predicted to be large, the driving assistance apparatus 1-1 performs driving assistance. Hence, with the driving assistance apparatus 1-1 according to this embodiment, driving assistance can be executed on the basis of the reaction of the driver to the pedestrian, and as a result, driving assistance can be performed while suppressing a sense of discomfort experienced by the driver.

As shown in FIG. 2, the driving assistance apparatus 1-1 according to this embodiment includes a driving characteristic estimation function and a driving assistance function. The driving characteristic estimation function is used to estimate a driving characteristic of the driver relative to an object. Here, the object is a moving body on a periphery of a host vehicle, for example a moving body in front of the host vehicle. Further, the moving body includes a pedestrian, a light vehicle such as a motorcycle, and another object that moves along a road. The driving assistance apparatus 1-1 includes a default driving behavior reference created in advance in relation to the object. Driving assistance is performed on the basis of the default driving behavior reference before sufficient sampling has been performed to estimate the driving characteristic of the driver. With the driving characteristic estimation function, the driving characteristic can be estimated on the basis of actual driving operations performed by the driver, whereupon the driving behavior reference can be updated.

The driving assistance function is used to perform driving assistance on the basis of the driving behavior reference. The driving assistance function predicts a difference between the driving behavior reference and an actual driving operation performed by the driver, and then determines whether or not to perform driving assistance and determines an assistance level of the driving assistance. The driving assistance apparatus 1-1 according to this embodiment performs driving assistance on the basis of not only information relating to the pedestrian or other moving body, but also the driving operation performed by the driver. When driving assistance is provided uniformly on the basis of information relating to the moving body, the driving assistance may not correspond to the feelings of the driver. With respect to identical driving assistance, for example, a highly skilled driver may feel that the assistance is excessive and intrusive, whereas a poorly skilled driver may wish for a higher level of assistance.

By providing driving assistance on the basis of an actual driving operation, the driving assistance apparatus 1-1 according to this embodiment can provide driving assistance that takes into account the reaction of the driver to the posture and movement of the pedestrian or the like. By determining whether or not to provide assistance and determining the assistance level on the basis of the reaction to the moving body, driving assistance corresponding to the feelings of the driver can be performed. Further, by determining the assistance level on the basis of the driving operation, the assistance level can be determined to reduce a risk of approaching the pedestrian or the like by notifying the driver of the existence of the pedestrian or the like when the driver performs a driving operation that deviates from a normal operation.

As shown in FIG. 3, the driving assistance apparatus 1-1 includes an object information calculation unit 10, a model database 11, a host vehicle information gathering unit 12, a model selection unit 13, a model update determination unit 14, a model determination unit 15, a driving behavior prediction unit 16, a driving behavior prediction determination unit 17, an assistance determination unit 18, an alerting assistance unit 19, a vehicle control assistance unit 20, and an alerting device 30.

The object information calculation unit 10 calculates information relating to the moving body serving as the object. In the following description, a case in which the moving body is a pedestrian will be described as an example. The object information calculation unit 10 obtains information relating to the pedestrian on the basis of detection results from various vehicle exterior environment sensors. The vehicle exterior environment sensors are constituted by a millimeter wave radar, a camera, and so on, for example. The object information calculation unit 10 calculates information indicating a position of the pedestrian, information indicating a posture of the pedestrian, information indicating behavior of the pedestrian, information indicating attributes of the pedestrian, and the like on the basis of the detection results from the vehicle exterior environment sensors. The information indicating the position of the pedestrian includes a relative position of the pedestrian relative to the host vehicle, and a relative position of the pedestrian relative to a lane in which the host vehicle is traveling. The information indicating the posture of the pedestrian includes an orientation of an upper body part of the pedestrian, an orientation of a face of the pedestrian, and a posture of the pedestrian (standing, leaning forward, and so on). The information indicating the behavior of the pedestrian includes an advancement direction of the pedestrian and a movement speed of the pedestrian. The information indicating the attributes of the pedestrian includes the age, sex, clothing, and occupation of the pedestrian. Calculation results obtained by the object information calculation unit 10 are transmitted to the model selection unit 13.

The host vehicle information gathering unit 12 gathers information relating to the host vehicle. More specifically, the host vehicle information gathering unit 12 obtains a position of the host vehicle, a speed of the host vehicle, a steering angle of the host vehicle, an accelerator depression amount, a brake depression amount, a steering wheel operation amount, and so on. A signal indicating the information gathered by the host vehicle information gathering unit 12 is transmitted to the model selection unit 13.

The model selection unit 13 selects a driving model on the basis of the object information. A plurality of models are stored in the model database 11. The model selection unit 13 determines a driving model to be used for control from among the models stored in the model database 11 on the basis of features of the pedestrian such as the posture and behavior of the pedestrian.

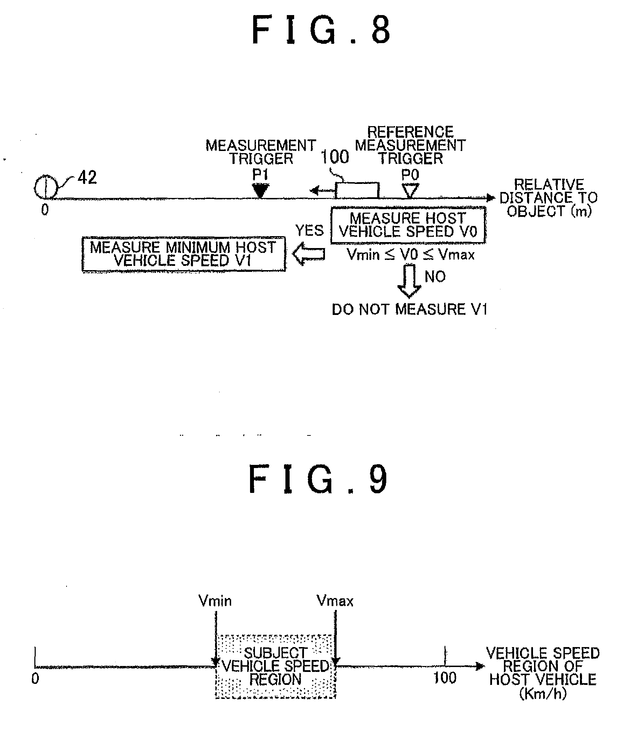

More specifically, the model selection unit 13 observes the pedestrian (see reference numeral 42 in FIG. 8) from a reference measurement trigger time (a point at which P0 is passed in FIG. 8) to a measurement trigger time (a point at which P1 is passed in FIG. 8), and selects a model on the basis of (a) the position (a fixed distance within or outside a travel lane of the host vehicle), (b) the speed (steady or non-steady), (c) the advancement direction (crossing or parallel), (d) the posture (standing or walking), (e) the posture orientation (oriented toward the road or other), (f) the orientation of the upper body part (confirming or not confirming the host vehicle direction), and so on of the pedestrian, obtained by the object information calculation unit 10.

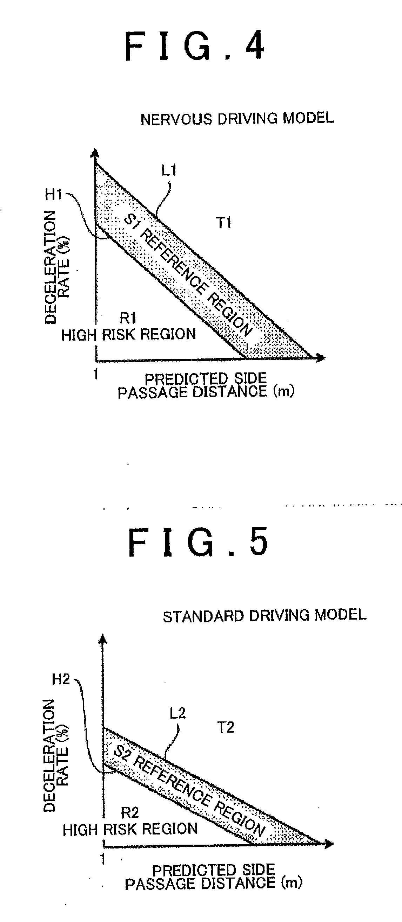

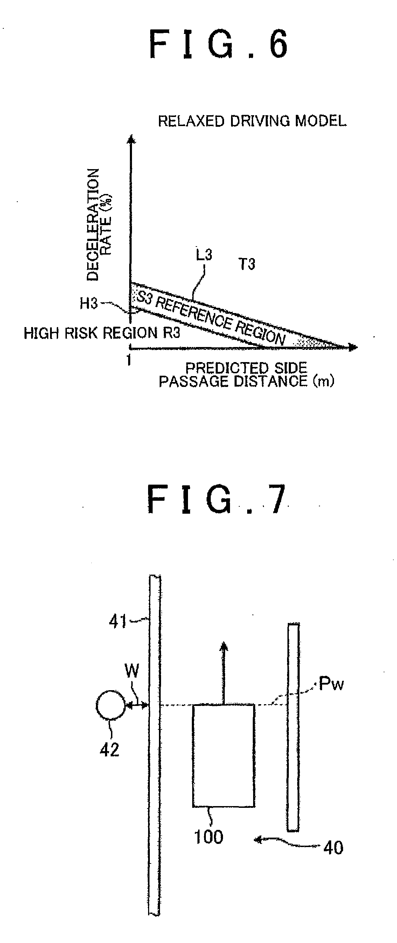

Driving models shown in FIGS. 4 to 6 are examples of the models stored in the model database 11. FIG. 4 is a view showing a nervous driving model. FIG. 5 is a view showing a standard driving model. FIG. 6 is a view showing a relaxed driving model. The driving models shown in FIGS. 4 to 6 are examples of a plurality of model candidates that define a correspondence relationship between a driving operation performed by the driver and information indicating relative positions of a moving body detected on the periphery of the host vehicle and the host vehicle. In FIGS. 4 to 6, the abscissa shows a predicted side passage distance, and the ordinate shows a deceleration rate.

FIG. 7 is a view illustrating the predicted side passage distance. The predicted side passage distance is a predicted value of a distance W between a host vehicle lane 40 and a pedestrian 42 serving as the object when a host vehicle 100 passes a position Pw on the host vehicle lane 40 corresponding to a position of the pedestrian 42. In other words, the predicted side passage distance is a predicted value of an interval W between the pedestrian 42 serving as the object and the host vehicle lane 40 when the host vehicle 100 passes the pedestrian 42 from the side. The interval W between the pedestrian 42 and the host vehicle lane 40 can be set as a magnitude of a gap between a white line 41 on a sidewalk side of the host vehicle lane 40 and the pedestrian 42, for example. Note, however, that the invention is not limited thereto, and the interval W between the pedestrian 42 and the host vehicle lane 40 may be an interval between a curbstone and the pedestrian 42 or the like, for example. In other words, the predicted side passage distance is a predicted value of a distance between a reference line or a reference point on the host vehicle lane 40 and the pedestrian 42 when the host vehicle 100 passes by the side of the pedestrian 42. Note that the predicted side passage distance may be set as the magnitude of a gap between the host vehicle 100 and the pedestrian 42. The predicted side passage distance corresponds to a relative position between the moving body detected on the periphery of the host vehicle and the host vehicle. The relative position is not, however, limited to the predicted side passage distance.

The deceleration rate is a deceleration rate of the host vehicle 100 in a predetermined section of the host vehicle lane 40 preceding the pedestrian 42. FIG. 8 is a view illustrating the deceleration rate, and FIG. 9 is a view showing a subject vehicle speed region. As shown in FIG. 8, a first point P0 and a second point P1 in the host vehicle lane 40 are defined on the basis of a relative distance to the pedestrian 42 serving as the object. The deceleration rate of the host vehicle 100 in a section between the first point P0 and the second point P1 is calculated.

A vehicle speed V0 of the host vehicle 100 is measured using arrival of the host vehicle 100 at the first point P0 as a reference measurement trigger. The vehicle speed V0 will also be referred to as a "reference host vehicle speed V0". The driving assistance apparatus 1-1 monitors the speed of the host vehicle 100 while the host vehicle 100 travels between the first point P0 and the second point P1, and stores a minimum value of the vehicle speed within this section as a minimum host vehicle speed V1. The deceleration rate is calculated using arrival of the host vehicle 100 at the second point P1 as a measurement trigger. The deceleration rate is calculated in accordance with Equation (1) shown below.

$$\text{Deceleration rate} = 100 \times \{1 - (V1 / V0)\} \qquad (1)$$

Note that when the reference host vehicle speed V0 is a vehicle speed outside the subject vehicle speed region, the minimum host vehicle speed V1 is not measured, and the deceleration rate is not calculated. As shown in FIG. 9, the subject vehicle speed region is determined as a vehicle speed region extending from a minimum vehicle speed Vmin to a maximum vehicle speed Vmax. The minimum vehicle speed Vmin is determined as a vehicle speed at which it can be estimated that the host vehicle 100 is traveling at a sufficiently low speed, for example. The maximum vehicle speed Vmax is determined as a vehicle speed at which a time to collision TTC at the first point P0 is equal to or smaller than a fixed time, for example.

Hence, the predicted side passage distance is based on information relating to the pedestrian or other moving body, while the deceleration rate indicates the driving operation performed by the driver. Accordingly, the driving models shown in FIGS. 4 to 6 are models defining the correspondence relationship between the information relating to the moving body and the driving operation.

As shown in FIGS. 4 to 6, a high risk region R1, R2, R3, a reference region S1, S2, S3, and a low risk region T1, T2, T3 are set on each model. The reference region S1, S2, S3 is a region indicating a deceleration rate width serving as a reference relative to the predicted side passage distance. The reference regions S1, S2, S3 are determined on the basis of a probability distribution using the deceleration rate as a random variable, for example. The reference regions S1, S2, S3 of the default driving models are determined on the basis of deceleration rate data obtained from experiment results and the like, for example. The reference regions S1, S2, S3 are determined as regions including a fixed proportion of data, including central value data, of all of the obtained data, for example. Further, as will be described below, the reference regions S1, S2, S3 are updated on the basis of deceleration rates generated during driving operations performed by the driver in the past.

The high risk regions R1, R2, R3 are regions having lower deceleration rates than the reference regions S1, S2, S3. The high risk regions R1, R2, R3 are regions in which increased risk can be predicted in the relationship between the host vehicle 100 and the pedestrian 42, for example regions in which it may be predicted that the possibility of the host vehicle 100 approaching the pedestrian 42 such that a sufficient interval can no longer be maintained between the host vehicle 100 and the pedestrian 42 is high. The high risk regions R1, R2, R3 include a region in which the deceleration rate is negative, or in other words a case in which the host vehicle 100 accelerates rather than decelerates between the first point P0 and the second point P1. High risk side boundary lines H1, H2, H3 serving as boundary lines between the respective reference regions S1, S2, S3 and the respective high risk regions R1, R2, R3 are straight deceleration lines on which the reference host vehicle speed V0 is at the minimum vehicle speed Vmin. The high risk side boundary lines H1, H2, H3 may by curved lines.

The low risk regions T1, T2, T3 are regions having higher deceleration rates than the reference regions S1, S2, S3. Low risk side boundary lines L1, L2, L3 serving as boundary lines between the respective reference regions S1, S2, S3 and the respective low risk regions T1, T2, T3 are straight deceleration lines on which the reference host vehicle speed V0 is at the minimum vehicle speed Vmax. The low risk side boundary lines L1, L2, L3 may by curved lines.

The nervous driving model shown in FIG. 4 is a driving model used in a situation where the driver feels a comparatively high degree of nervousness. The nervous driving model is selected when, for example, the distance between the lane 40 in which the host vehicle 100 is traveling and the pedestrian 42 is small.

The relaxed driving model shown in FIG. 6 is a driving model used in a situation where the driver feels a low degree of nervousness and is therefore capable of dealing with the situation in a relaxed manner. The relaxed driving model is selected when, for example, the pedestrian 42 is standing away from the host vehicle lane 40 and is oriented toward an opposite side to the host vehicle lane 40 side.

The standard driving model shown in FIG. 5 is an intermediate driving model between the nervous driving model and the relaxed driving model. In other words, the standard driving model is a driving model used in a situation where the driver feels an intermediate degree of nervousness.

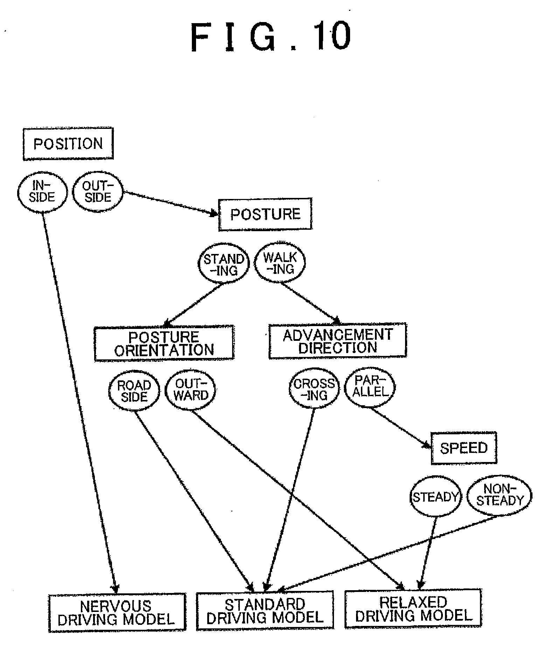

FIG. 10 is a view showing an example of a decision tree relating to model selection. The model selection unit 13 according to this embodiment selects a model in accordance with the decision tree shown in FIG. 10, for example. Model selection is performed when the pedestrian 42 is detected in front of the host vehicle 100, and a model is selected on the basis of the information relating to the pedestrian 42 every time the pedestrian 42 is detected by the object information calculation unit 10, for example. Note that when a plurality of pedestrians 42 are detected, a model may be selected for each pedestrian 42, and the model having the highest degree of nervousness from among the selected models may be used for control.

On the decision tree, first, a determination is made according to the position of the pedestrian 42. The model selection unit 13 determines whether or not the pedestrian 42 is on the outside of the host vehicle lane 40 and within a fixed distance from the host vehicle lane 40. When the pedestrian 42 is within the fixed distance from the host vehicle lane 40, the nervous driving model is selected.

When the pedestrian 42 is not within the fixed distance from the host vehicle lane 40, a determination is made according to the posture of the pedestrian 42. The model selection unit 13 determines whether the pedestrian 42 is standing or walking. When the pedestrian 42 is determined to be in a standing posture, a determination is made according to the orientation of the posture of the pedestrian 42. When the pedestrian 42 is determined to be walking, on the other hand, a determination is made according to the advancement direction of the pedestrian 42.

In the determination relating to the orientation of the posture of the pedestrian 42, a determination is made as to whether the pedestrian 42 is oriented toward the host vehicle lane 40 side or the opposite side to the host vehicle lane 40 (i.e. outward). The model selection unit 13 selects the standard driving model after determining that the pedestrian 42 is oriented toward the host vehicle lane 40 side, and selects the relaxed driving model after determining that the pedestrian 42 is oriented outward.

In the determination relating to the advancement direction of the pedestrian 42, a determination is made as to whether the advancement direction of the pedestrian 42 is a direction crossing the host vehicle lane 40 or a direction advancing parallel to the host vehicle lane 40. The model selection unit 13 selects the standard driving model after determining that the advancement direction of the pedestrian 42 is the direction crossing the host vehicle lane 40. After determining that the advancement direction is the direction advancing parallel to the host vehicle lane 40, on the other hand, the model selection unit 13 makes a determination according to the speed of the pedestrian 42.

In the determination relating to the speed, a determination is made as to whether the movement speed of the pedestrian 42 is a steady speed or a non-steady speed. The model selection unit 13 selects the relaxed driving model when the movement speed of the pedestrian 42 is a steady speed, and selects the standard driving model when the movement speed of the pedestrian 42 is a non-steady speed. Note that a corresponding model may be selected from among a plurality of models similarly in relation to a moving body other than a pedestrian.

The elements that are determined in order to select the model are not limited to those shown in the drawing. For example, a determination may be made according to the orientation of the upper body part of the pedestrian 42. When the upper body part is oriented so as to confirm the direction of the host vehicle 100, a model having a relatively low degree of nervousness may be selected, and in other cases, a model having a relatively high degree of nervousness may be selected.

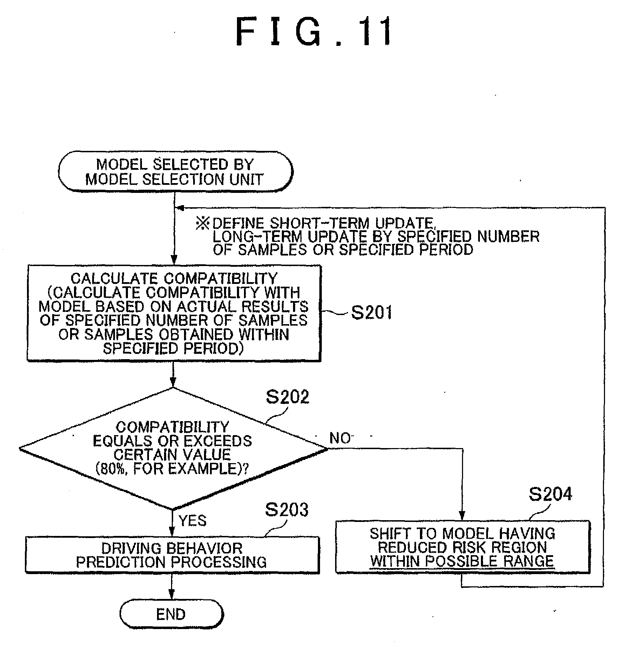

The model update determination unit 14 performs processing to update the model selected by the model selection unit 13. The model update determination unit 14 can update the model determined for use on the basis of the determined model and the driving operation performed by the driver following detection of the moving body. FIG. 11 is a flowchart showing a model updating operation. The model update determination unit 14 updates the model in accordance with the flowchart shown in FIG. 11, for example. The flowchart shown in FIG. 11 is executed when a model has been selected by the model selection unit 13.

In step S201, a compatibility is calculated by the model update determination unit 14. The compatibility indicates a degree of compatibility between the selected model and the driving characteristic of the driver. Further, the compatibility indicates a degree of compatibility between the model determined for use and the driving operation performed by the driver following detection of the moving body. The model update determination unit 14 includes a short-term update determination unit 14a that performs a short-term update on the basis of a short-term compatibility, and a long-term update determination unit 14b that performs a long-term update on the basis of a long-term compatibility.

The short-term update is performed on the basis of a specified number of most recent samples. For example, when the currently selected model is the standard driving model, driving operations performed by the driver when the standard driving model was selected in the past are stored as samples. In other words, the sample indicates the relationship between the information relating to the moving body, obtained when a moving body such as a pedestrian was detected in the past, and the driving operation performed by the driver following detection of the moving body, and also indicates the correspondence relationship between the model determined for use and the operation performed by the driver following detection of the moving body. When a specified predetermined number of samples (four, for example) have been obtained, the short-term compatibility is calculated on the basis of the stored predetermined number of samples. The compatibility is calculated in accordance with Equation (2) shown below.

$$\text{Compatibility} = (N1 \, / \, Nt) \times 100 \qquad (2)$$

Here, N1 is the number of samples obtained outside the high risk region, and Nt is the total number of samples.

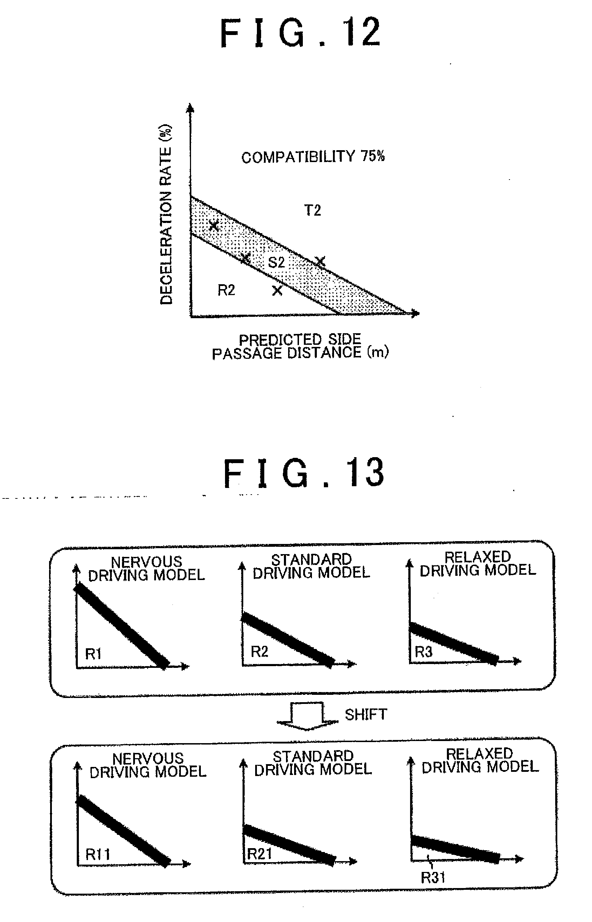

FIG. 12 is a view showing an example of calculation of the compatibility. In FIG. 12, the compatibility is calculated from a total of four samples, namely one sample obtained in the high risk region R2 and three samples obtained outside the high risk region R2. In this case, the compatibility is calculated at 75% in Equation (2). When the compatibility has been calculated, the processing advances to step S202.

In step S202, the model update determination unit 14 determines whether or not the compatibility equals or exceeds a certain value. A threshold for the determination of step S202 is a reference value for determining whether or not the model is compatible with the driving characteristic of the driver, and is set at 80%, for example. When it is determined as a result of the determination of step S202 that the compatibility equals or exceeds the threshold (step S202 - Y), the processing advances to step S203, and in all other cases (step S202 - N), the processing advances to step S204.

In step S203, model updating by the model update determination unit 14 is switched to driving behavior prediction processing. Following execution of step S203, the current control flow is terminated.

In step S204, the model update determination unit 14 shifts to a model having a smaller risk region within a possible range. FIG. 13 is a view showing an example of the model shift performed by the model update determination unit 14. As shown in FIG. 13, post-shift high risk regions R11, R21, R31 are respectively smaller than the pre-shift high risk regions R1, R2, R3. In a single shift, for example, the reference regions S1, S2, S3 are shifted to an origin side such that the high risk regions R1, R2, R3 are respectively reduced by a fixed amount or a fixed proportion. As an example, a maximum value of the deceleration rate in each high risk region R1, R2, R3 is shifted so as to be reduced by a fixed proportion relative to the corresponding predicted side passage distance.

When the driver is highly skilled, for example, the default high risk regions R1, R2, R3 may be too wide, and as a result, the selected model may not match the driving characteristic of the driver. A highly skilled driver may be able to assess the behavior of the pedestrian 42 and perform appropriate avoidance behavior without decelerating greatly. In other words, on the default models, the deceleration rates set as the high risk regions R1, R2, R3 may, depending on the driver, be deceleration rates that ought to be classified as the reference regions S1, S2, S3. When driving assistance based on the default models is performed in relation to this type of driver, the driver may feel that the assistance is intrusive. When the model is shifted on the basis of the compatibility calculated from the driving operations of the driver, on the other hand, the high risk regions R11, R21, R31 can be updated to become more appropriate. As a result, driving assistance can be provided in accordance with the needs of the driver

The short-term update is preferably executed repeatedly until the compatibility equals or exceeds the threshold. When the compatibility reaches or exceeds the threshold as a result of the short-term updates, short-term updating of the model is terminated. Here, the driving characteristic of the driver may vary over the long term. For example, the driving characteristic may vary when the skill of the driver improves or the driver becomes accustomed to the vehicle, and as a result, the compatibility of the models may decrease. In this embodiment, therefore, a long-term update is executed on the models. In the long-term update, a long-term compatibility is calculated on the basis of samples obtained over a specified period. The samples used to calculate the long-term compatibility may be all of the samples obtained over the specified period, the most recent samples obtained within a fixed period, or a specified number of most recent samples. When the long-term compatibility is smaller than a threshold, the models are shifted in a similar manner to the short-term update. By performing the long-term update, a degree of assistance is updated in accordance with variation in a driving condition of the driver. As a result, the driver can continue using the driving assistance technology for a long time.

Note that when the models are shifted, a fixed limitation is preferably applied to the shift. When, for example, driving assistance is provided by voice, video, or the like, measures must be taken to ensure that temporal leeway can be secured between provision of the assistance and the performance of avoidance behavior by the driver. Hence, a minimum securable region is preferably determined in the post-shift high risk regions R11, R21, R31. When the model shift has been performed in step S204, the processing advances to step S201.

Note that the models may be updated when deceleration resulting from the driving operation performed by the driver deviates from the low risk region T1, T2, T3. In this case, N1 may be set as the number of samples obtained outside the low risk region in Equation (2) used to calculate the compatibility. When the compatibility does not equal or exceed the threshold, the reference regions S1, S2, S3 are shifted to an opposite side to the origin side so as to reduce the low risk regions T1, T2, T3. By updating the models in this manner, appropriate driving assistance can be performed in a case where a driver who tends to decelerate greatly when a pedestrian is in front deviates from a normal deceleration operation. In other words, the models can be updated so as to reduce risk in accordance with the driving characteristic of the driver.

The model determination unit 15 determines the model to be used in the control. The model determination unit 15 determines the driving model on the basis of the update result generated by the model update determination unit 14 and the information gathered by the host vehicle information gathering unit 12. For example, when the models have been updated by the model update determination unit 14, an updated model is selected as the model to be used for assistance determination instead of a pre-update model.

The driving behavior prediction unit 16 includes a side passage distance prediction unit 16a and a deceleration rate calculation unit 16b. The side passage distance prediction unit 16a calculates the predicted side passage distance at the point

(the second point PI) serving as the measurement trigger. The predicted side passage distance can be calculated on the basis of the calculation result generated by the object information calculation unit 10 and the information gathered by the host vehicle information gathering unit 12. The deceleration rate calculation unit 16b calculates the reference host vehicle speed V0 and the minimum host vehicle speed V1 from the speed detected by the host vehicle information gathering unit 12, and calculates the deceleration rate using Equation (1).

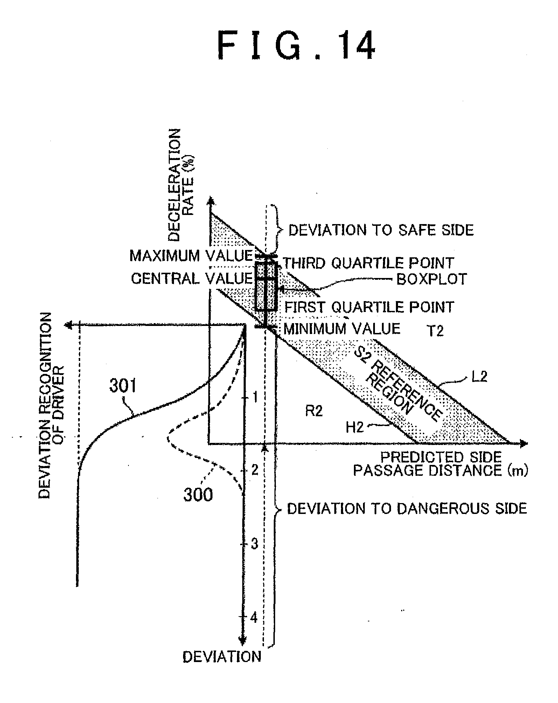

The driving behavior prediction determination unit 17 calculates a deviation from a driving operation reference. FIG. 14 is a view illustrating the deviation and a degree of deviation recognition. In FIG. 14, the downward ordinate shows the deviation, and the leftward abscissa shows the degree of deviation recognition of the driver. The deviation is a degree by which an actual deceleration rate generated by the driving operation performed by the driver deviates from the reference region S2. When the deceleration rate generated by the driving operation takes a value within the reference region S2 relative to the calculated predicted side passage distance, the deviation is zero. When the deceleration rate generated by the driving operation takes a value outside the reference region S2, on the other hand, the deviation is calculated at a value other than zero, and as the value of the deceleration rate generated by the driving operation diverges from the reference region S2, the deviation increases in magnitude.

The magnitude of the deviation is calculated using the width of the reference region S2 as a unit. As shown in FIG. 14, a single unit of the deviation is a difference between a maximum value and a minimum value of the reference region S2 at the calculated predicted side passage distance, or in other words the width of the reference region S2 in the ordinate direction. When the deceleration rate generated by the driving operation takes a value within the high risk region R2, a value obtained by dividing a difference between a deceleration rate value on the high risk side boundary line H2 and the value of the deceleration rate generated by the driving operation by a single unit of the deviation serves as the deviation.

Note that the deviation may be calculated when the deceleration rate generated by the driving operation takes a value within the low risk region T2. In this case, a value obtained by dividing a difference between a deceleration rate value on the low risk side boundary line L2 and the value of the deceleration rate generated by the driving operation by a single unit of the deviation serves as the deviation. When the deceleration rate generated by the driving operation takes a value within the low risk region T2, the deviation may be set at a negative value.

The assistance determination unit 18 determines whether or not to perform driving assistance on the basis of the deviation, and determines the assistance level at which the driving assistance is to be performed. The driving assistance includes alerting assistance, in which information is transmitted to the driver by voice, light, video, vibration, or the like, and vehicle control assistance, in which the host vehicle 100 is controlled to assist avoidance behavior and so on. A plurality of assistance levels differing in a degree of stimulation, a degree of intervention through control, and so on may be set respectively for the altering assistance and the vehicle control assistance.

A correspondence relationship between the deviation and the assistance level may be determined in advance using a method described below, for example. In FIG. 14, a dotted line 300 indicates a distribution function (a probability density function) obtained as a result of a sensory evaluation, and a solid line 301 indicates a probability distribution function. The distribution function 300 is created on the basis of results of a psychological survey. The psychological survey is performed to determine a deviation at which each of a plurality of drivers starts to become aware of having deviated from a driving operation in the reference region S2. At a deviation having a central value on the distribution function 300, half of the drivers become aware of having deviated from the reference region S2.

The probability distribution function 301 is a curve obtained by integrating the distribution function 300. The probability distribution function 301 is a psychological deviation curve expressing the degree to which the driver recognizes the deviation in a sensory manner. The assistance level is determined in accordance with the probability distribution function 301, for example. As the probability distribution function 301 increases, a driving operation that makes the driver aware of having deviated from the reference region S2 is more likely to be performed. In other words, when the calculated deviation is a deviation corresponding to a large value of the probability distribution function 301, the driver is more likely to be driving without noticing the existence of the pedestrian 42 or, having noticed the pedestrian 42, to be driving without taking sufficient care. To put it another way, as the value of the probability distribution function 301 increases, the driver is more likely to accept driving assistance. Furthermore, as the value of the probability distribution function 301 increases, driving assistance having a high assistance level may be more preferable.

Hence, by determining whether or not to provide driving assistance and determining the assistance level at which the driving assistance is to be provided on the basis of the value of the probability distribution function 301, delayed awareness by the driver can be suppressed, and appropriate driving assistance unlikely to cause the driver to experience a sense of discomfort can be provided. Further, by increasing the assistance level in accordance with the magnitude of the probability distribution function 301, the driver can be made aware in a sensory manner of the amount by which the driving operation deviates from a reference driving operation, and as a result, the driver can obtain a sense of the effectiveness of the driving assistance.

In a situation where it is predicted to be difficult for the driver to perform appropriate avoidance behavior following the alerting assistance, the assistance determination unit 18 determines that the vehicle control assistance is to be performed. When the deceleration rate is small, the time required for the host vehicle 100 to approach the pedestrian 42 shortens. Therefore, when the driver starts to perform an avoidance operation after being made aware of the pedestrian 42 by the alerting assistance, an avoidance timing may be late, and as a result, it may be impossible to reduce the risk sufficiently. The assistance determination unit 18 determines whether or not to perform the vehicle assistance control on the basis of the time to collision TTC and the predicted side passage distance, for example.

The assistance determination unit 18 executes the determined driving assistance. The alerting assistance unit 19 controls the alerting device 30 on the basis of an alerting assistance execution command issued by the assistance determination unit 18. The alerting device 30 is an information transmission device that transmits information to the driver by voice, light, video, vibration, or other stimulation. The alerting device 30 is capable of transmitting information at a plurality of assistance levels having different stimulation strengths or the like. For example, when information is transmitted to the driver by a buzzer sound, the volume of the sound may be increased or an interruption interval of the sound may be shortened as the assistance level increases.

The vehicle control assistance unit 20 executes the vehicle control assistance on the basis of a vehicle control assistance execution command issued by the assistance determination unit 18. The vehicle control assistance unit 20 is capable of controlling a motor, a brake device, a steering device, and so on, and by controlling these components, the vehicle control assistance unit 20 can assist the driving operation performed by the driver, for example an operation to prevent the driver from approaching the pedestrian 42 or the like.

Here, referring to FIG. 1, a flow of the driving assistance according to this embodiment will be described. The control flow shown in FIG. 1 is executed repeatedly during travel, for example.

First, in step S101, the model selection unit 13 selects the default model. The model selection unit 13 reads the default model stored in the model database 11. Once step S101 has been executed, the processing advances to step S102.

In step S102, environment information and host vehicle information are measured. The object information calculation unit 10 obtains environment information, including information relating to the pedestrian 42 and information relating to the host vehicle lane 40, on the basis of the detection results generated by the vehicle exterior environment sensors. The host vehicle information gathering unit 12 obtains host vehicle information such as the position, speed, steering angle, pedal operation amounts, and so on of the host vehicle 100.

Next, in step S103, a determination is made as to whether or not a relative distance and a relative speed between the pedestrian 42 and the host vehicle 100 are within a measurement range. This determination is made by the model selection unit 13, for example. The model selection unit 13 determines whether or not the host vehicle 100 is in the region between the first point P0 and the second point P1 on the basis of the relative distance between the host vehicle 100 and the pedestrian 42. When it is determined that the host vehicle 100 is not in the region between the first point P0 and the second point P1, the determination of step S103 is negative. The model selection unit 13 also determines whether or not the relative speed between the host vehicle 100 and the pedestrian 42 at the first point P0 is no lower than the minimum vehicle speed Vmin and no higher than the maximum vehicle speed Vmax. When it is determined that the relative speed is not no lower than the minimum vehicle speed Vmin and no higher than the maximum vehicle speed Vmax, the determination of step S103 is negative.

When an affirmative determination result is obtained in step S103 (step S103 - Y), the processing advances to step S104, and in all other cases (step S103 - N), the processing advances to step S102.

In step S104, the host vehicle information gathering unit 12 observes the deceleration rate, the pedal operation amounts, and so on. The host vehicle information gathering unit 12 calculates the deceleration rate on the basis of the speed of the host vehicle 100. Once step S104 has been executed, the processing advances to step S105.

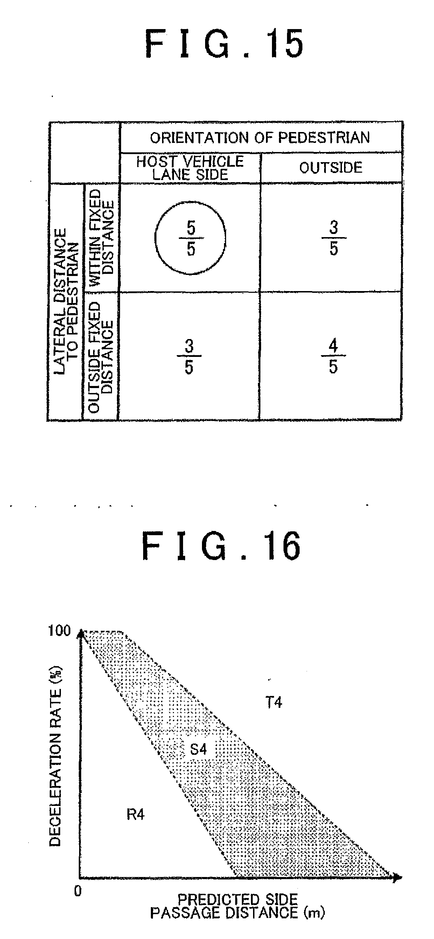

In step S105, the short-term update determination unit 14a determines whether or not the data required to update the model has been obtained. The short-term update determination unit 14a determines whether or not a required number of samples has been obtained in relation to a model selection parameter, for example a combination of a lateral distance between the pedestrian 42 and the host vehicle lane 40 and the orientation of the pedestrian 42. FIG. 15 is a view showing an example of the number of data required for a model update.

The number of obtained samples (a numerator) and the number of samples (a denominator) serving as a measurement standard required for a model update are stored respectively in relation to the combination of the orientation of the pedestrian 42 and the lateral distance to the pedestrian 42. In FIG. 15, the required number of data samples has been obtained in relation to a situation where the pedestrian 42 is oriented toward the host vehicle lane 40 side and the distance from the host vehicle lane 40 to the pedestrian 42 is within a fixed distance. In other situations, the number of samples is insufficient and therefore the model cannot yet be updated. In this case, if the currently selected model is an updatable model, updating processing is performed, and if not, the default model is used as is.

When the required number of data samples has been obtained in relation to a situation corresponding to the environment information obtained in step S102, the determination of step S105 is affirmative. When it is determined as a result of the determination of step S105 that the data required for a model update have been obtained (step S105 - Y), the processing advances to step S 106, and in all other cases (step S105-N), the processing advances to step S109.

In step S106, the short-term update determination unit 14a decides to update the model and executes a model update. The short-term update determination unit 14a updates the model such that the compatibility of the model satisfies a predetermined reference. Once step S 106 has been executed, the processing advances to step S107.

In step S107, the long-term update determination unit 16b determines whether or not the model (the updated model) subjected to the short-term update requires a long-term update. The long-term update determination unit 16b calculates the long-term compatibility of the current model (the updated model) on the basis of an observation result obtained over a fixed period of monthly units, yearly units, or the like, and determines whether or not to update the model. When it is determined as a result of the determination of step S107 that a model update is required (step S107 - Y), the processing advances to step S108, and in all other cases (step S107 - N), the processing advances to step S 110.

In step S108, the deviation from the re-updated model is calculated. The long-term update determination unit 16b executes a long-term update (a re-update) on the updated model corresponding to the current situation. The driving behavior prediction determination unit 17 then calculates the deviation on the basis of the re-updated model subjected to the long-term update, and the predicted side passage distance and deceleration rate calculated by the driving behavior prediction unit 16. Once step S108 has been executed, the processing advances to step S111.

In step S110, the deviation from the updated model is calculated. The driving behavior prediction determination unit 17 calculates the deviation on the basis of the updated model subjected to the short-term update, and the predicted side passage distance and deceleration rate calculated by the driving behavior prediction unit 16. Once step S110 has been executed, the processing advances to step S111.

When the determination of step S105 is negative such that the processing advances to step S109, the deviation from the default model is calculated in step S109. The driving behavior prediction determination unit 17 calculates the deviation on the basis of the default model, and the predicted side passage distance and deceleration rate calculated by the driving behavior prediction unit 16. Once step S109 has been executed, the processing advances to step S111.

In step S111, the assistance determination unit 18 determines whether or not the deviation is large. The assistance determination unit 18 determines whether or not the deviation calculated in step S108, S109, or S110 is large For example, the assistance determination unit 18 performs the determination of step S111 on the basis of a comparison result between a determination value determined on the basis of the probability distribution function 301 and the calculated deviation. When it is determined as a result of the determination of step S111 that the deviation is large (step S111 - Y), the processing advances to step S 113, and in all other cases (step S111 - N), the processing advances to step S112.

In step S112, the assistance determination unit 18 decides not to perform notification assistance. The assistance determination unit 18 outputs a command to switch information provision by the alerting device 30 OFF. Since the deviation indicates that the alerting assistance is not required, the vehicle control assistance is also switched OFF. Once step S112 has been executed, the current control flow is terminated.

In step S 113, the assistance determination unit 18 decides to perform notification assistance. The assistance determination unit 18 outputs a command to switch information provision by the alerting device 30 ON. The alerting assistance unit 19 then controls the alerting device 30 in accordance with the information provision ON command such that driving assistance through notification is executed. Once step S113 has been executed, the current control flow is terminated.

Hence, the driving assistance apparatus 1-1 according to this embodiment includes a plurality of model candidates that define the correspondence relationship between the driving operation performed by the driver and the information indicating the relative positions of a moving body such as a pedestrian detected on the periphery of the host vehicle and the host vehicle, determines the model to be used from among the plurality of model candidates on the basis of the information relating to the detected moving body, and executes driving assistance on the basis of the determined model and the driving operation performed by the driver following detection of the moving body. Accordingly, the need for driving assistance and the driving assistance level can be determined on the basis of the reaction of the driver to the pedestrian or the like. As a result, the driving assistance apparatus 1-1 can provide driving assistance while suppressing a sense of discomfort experienced by the driver.

Further, the driving assistance apparatus 1-1 performs driving assistance when the deviation from the selected model is large, and modifies the driving assistance level in accordance with the degree of deviation. When the deviation from the model is small, on the other hand, driving assistance is not performed. In other words, the driving assistance provided by the driving assistance apparatus 1-1 is based on a degree of deviation between the driving operation performed by the driver following detection of the pedestrian or other moving body and the driving operation of the selected model. As a result, the driving assistance apparatus 1-1 can provide driving assistance in accordance with the feelings of the driver.

The various models, such as the nervous driving model, the standard driving model, and the relaxed driving model, have differing reference regions S1, S2, S3 and high risk regions R1, R2, R3. Therefore, the assistance level is determined within a range determined in accordance with the selected model. In other words, the assistance level is determined on the basis of a driving operation performed by the driver within a range determined in accordance with the information relating to the pedestrian 42 or other moving body. Hence, the assistance level can be determined within an appropriate range in accordance with the posture, movement, and so on of the pedestrian or the like, and as a result, assistance can be provided in accordance with the feelings of the driver.

Furthermore, in the driving assistance apparatus 1-1 according to this embodiment, the need for driving assistance and the assistance level are determined on the basis of a correspondence relationship between the deviation from the reference region S1, S2, S3 and the degree of deviation recognition of the driver. As a result, driving assistance that corresponds to the feelings of the driver and is therefore unlikely to cause the driver to experience a sense of discomfort can be performed.

Note that when the pedestrian 42 crosses or starts to cross in front of the host vehicle 100, a front crossing driving model shown in FIG. 16 can be used instead of the driving models shown in FIGS. 4 to 6. As shown in FIG. 16, a high risk region R4 of the front crossing driving model widens to a higher deceleration rate region than the high risk regions R1, R2, R3 of the other driving models. In other words, a reference region S4 in which the predicted side passage distance is short has a narrower width than the reference regions S1, S2, S3 of the other driving models. Hence, when the pedestrian 42 starts to cross the host vehicle lane in a position close to the host vehicle 100, the risk is determined to be high unless rapid deceleration close to 100% (i.e. sufficient to stop the host vehicle 100) is performed up to the second point P1, and accordingly, driving assistance is started.

Note that in this embodiment, the assistance level is determined on the basis of the driving operation performed by the driver following detection of the pedestrian, but the assistance level determination timing is not limited thereto. For example, the assistance level may be determined on the basis of the information relating to the pedestrian detected in front of the host vehicle 100, and the assistance level may be updated on the basis of the driving operation performed by the driver. For example, the highest assistance level may be set when the nervous driving model is selected, an intermediate assistance level may be set when the standard driving model is selected, and the lowest assistance level (including no assistance) may be set when the relaxed driving model is selected. When the deviation of the driving operation performed by the driver is large, the driving assistance level may be updated in order to reduce the risk, and when the deviation is not large, the assistance level may be left as is without being updated. The assistance may be started after determining whether or not to update the assistance level on the basis of the driving operation performed by the driver, for example.

Thus, when the risk is high at the driving assistance level determined on the basis of the posture and movement of the pedestrian, the driving assistance level is updated in order to reduce the risk, and when the risk is not high, the driving assistance level is not updated. In so doing, driving assistance can be provided in consideration of the reaction of the driver to the posture and movement of the pedestrian. As a result, the driver can be prevented from experiencing a sense of discomfort in relation to the content of the assistance.

[Modified Example of Embodiment]

A modified example of the embodiment will now be described. In the above embodiment, the deceleration rate is used as the driving operation for determining the degree of risk, but the driving operation is not limited thereto, and the degree of risk may be calculated on the basis of various detection results relating to the driving operation performed by the driver, such as a driving operation amount, an operation timing, an operation force, an operation speed, or a vehicle behavior generated as a result of the driving operation.

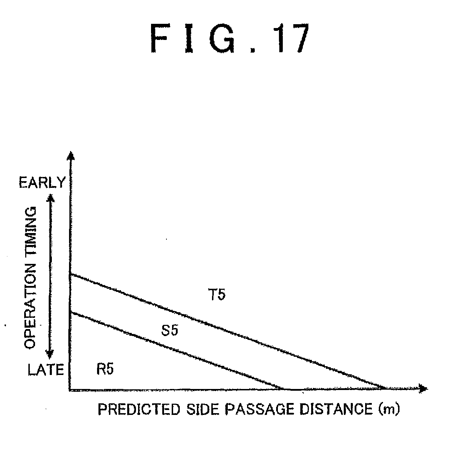

FIG. 17 is a view showing an example of a driving model on which the ordinate shows the operation timing. A location close to the origin on the ordinate indicates a late operation timing, and the operation timing becomes steadily earlier away from the origin. A high risk region R5 is located on a late operation timing side of an operation timing in a reference region S5, and a low risk region T5 is located on an early operation timing side of an operation timing in the reference region S5.

The operation timing may be set as a timing at which the accelerator is switched OFF or a timing at which the brake is switched ON, for example. The invention is not limited thereto, however, and a timing of a steering operation in a direction for avoiding the pedestrian 42 may be set as the operation timing of FIG 17. The operation timing can be detected earlier than the vehicle behavior. Hence, by performing a risk evaluation using the operation timing, the need for driving assistance and the assistance level can be determined early. Furthermore, when the timing or the like of the driving operation is detected instead of the vehicle behavior, effects from external disturbances can be reduced, and as a result, the reaction of the driver can be detected directly.

The content disclosed in the embodiment and modified example described above may be implemented in an appropriate combination.

| | |
|---|---|
| 1-1 | driving assistance apparatus |
| 40 | host vehicle lane |
| 41 | white line |
| 42 | pedestrian |
| 100 | host vehicle |
| V0 | reference host vehicle speed |
| V1 | minimum host vehicle speed |
| P0 | first point |
| P1 | second point |
| H1, H2, H3 | high risk side boundary line |
| L1, L2, L3 | low risk side boundary line |
| R1, R2, R3 | high risk region |
| S1, S2, S3 | reference region |
| T1, T2, T3 | low risk region |

**Claims**

1. A driving assistance apparatus, comprising a plurality of model candidates that define a correspondence relationship between a driving operation performed by a driver and information indicating relative positions of a moving body detected on a periphery of a host vehicle and the host vehicle,
   wherein a model to be used is determined from among the plurality of model candidates on the basis of information relating to the detected moving body, and
   driving assistance is executed on the basis of the determined model and a driving operation performed by the driver following detection of the moving body.

2. The driving assistance apparatus according to claim 1, wherein the determined model can be updated on the basis of the determined model and the driving operation performed by the driver following detection of the moving body.

3. The driving assistance apparatus according to claim 2, wherein a compatibility between the determined model and the driving operation performed by the driver following detection of the moving body is calculated on the basis of a predetermined number of samples of a correspondence relationship between the model and the driving operation, and
   when the compatibility is smaller than a set reference value, the model is updated.

4. The driving assistance apparatus according to claim 2 or 3, wherein the determined model is updated in accordance with both a short-term compatibility and a long-term compatibility with the driving operation performed by the driver following detection of the moving body.

5. The driving assistance apparatus according to claim 1 or 2, wherein the driving assistance is based on a degree of deviation between the determined model and the driving operation performed by the driver following detection of the moving body.

# FIG.1

```
                    ┌─────────┐
                    │  START  │
                    └────┬────┘
                         │                  S101                    ┌─────────┐
              ┌──────────▼───────────┐                             │   DB    │
              │ SELECT DEFAULT MODEL │◄────────────────────────────│  MODEL  │
              └──────────┬───────────┘                             │CANDIDATES│
                         │                                          └─────────┘
              ┌──────────▼───────────┐       S102
              │ MEASURE ENVIRONMENT  │
              │   AND HOST VEHICLE   │
              └──────────┬───────────┘
                         │              S103
                      ╱──▼──╲
                   ╱  RELATIVE   ╲
                 ╱  DISTANCE AND    ╲
               ╱   RELATIVE SPEED      ╲     NO
              ⟨ BETWEEN PEDESTRIAN AND  ⟩─────────┐
               ╲  HOST VEHICLE WITHIN  ╱          │
                 ╲   MEASUREMENT      ╱           │
                   ╲    RANGE?     ╱              │
                      ╲──┬──╱                     │
                         │ YES                    │
              ┌──────────▼───────────┐   S104     │
              │ OBSERVE DECELERATION  │            │
              │ RATE, PEDAL OPERATION,│            │
              │         ETC.          │            │
              └──────────┬───────────┘            │
                         │            S105         │
                      ╱──▼──╲                      │
                   ╱   DATA     ╲                  │
                 ╱ OBTAINED RELATIVE╲              │
               ╱ TO MEASUREMENT      ╲    NO       │
              ⟨ STANDARDS OF LATERAL  ⟩────────────┼──────────┐
               ╲ DISTANCE TO PEDESTRIAN            │          │
                 ╲ AND ORIENTATION OF╱             │       S109│
                   ╲ PEDESTRIAN? ╱                 │    ┌──────▼──────┐
                      ╲──┬──╱                      │    │  CALCULATE  │
                         │ YES    S106             │    │  DEVIATION  │
              ┌──────────▼───────────┐             │    │ FROM DEFAULT│
              │ DETERMINE MODEL UPDATE│            │    │    MODEL    │
              └──────────┬───────────┘             │    └──────┬──────┘
                         │          S107           │          │
                      ╱──▼──╲                      │          │
                   ╱  OBSERVE    ╲                 │          │
                 ╱ FOR FIXED PERIOD╲               │          │
               ╱(MONTHLY, YEARLY UNITS),╲  NO       │          │
              ⟨ UPDATE OF UPDATED MODEL  ⟩──────────┼───┐      │
               ╲ DETERMINED (UPDATE     ╱          │   │      │
                 ╲  REQUIRED)?  ╱                  │   │      │
                   ╲──┬──╱  S108                   │ S110      │
                      │ YES                        │ ┌─▼──────┐│
              ┌───────▼──────────┐                 │ │CALCULATE││
              │ CALCULATE DEVIATION│                │ │DEVIATION││
              │ FROM RE-UPDATED    │                │ │FROM     ││
              │     MODEL          │                │ │UPDATED  ││
              └───────┬──────────┘                 │ │MODEL    ││
                      │                             │ └─┬──────┘│
                      │     S111                    │   │      │
                   ╱──▼──╲          YES             │   │      │
              ⟨ DEVIATION LARGE? ⟩──────────┐       │   │      │
                   ╲──┬──╱  S112            │ S113  │   │      │
                      │ NO          ┌───────▼─────┐ │   │      │
              ┌───────▼──────────┐  │   EXECUTE   │ │   │      │
              │ NO NOTIFICATION   │  │ NOTIFICATION│ │   │      │
              │   ASSISTANCE      │  │ ASSISTANCE  │ │   │      │
              └───────┬──────────┘  └──────┬──────┘ │   │      │
                      │                    │        │   │      │
                      └────────────────────┴────────┴───┴──────┘
                         │
                    ┌────▼────┐
                    │   END   │
                    └─────────┘
```

# F I G . 2

1-1

[DRIVING CHARACTERISTIC
ESTIMATION FUNCTION]

| CREATE DRIVING BEHAVIOR REFERENCE RELATIVE TO OBJECT |
|---|

OFFLINE
PROCESSING

ONLINE
REAL TIME
PROCESSING

| UPDATE DRIVING BEHAVIOR REFERENCE |
|---|

[DRIVING ASSISTANCE
FUNCTION]

| PREDICT DIFFERENCE FROM DRIVING BEHAVIOR REFERENCE |
|---|

| DRIVING ASSISTANCE |
|---|

# FIG.3

1-1

```
┌─────────────────────────────────┐
│ VEHICLE EXTERIOR                 │
│ ENVIRONMENT SENSOR               │
│ MILLIMETER WAVE RADAR            │
│ CAMERA                           │
└─────────────────────────────────┘
                │           10
                ▼
┌─────────────────────────────────┐        ╔═══════════╗ 11
│ OBJECT INFORMATION               │        ║  MODEL    ║
│ CALCULATION UNIT                 │        ║ DATABASE  ║   OFFLINE
└─────────────────────────────────┘        ╚═══════════╝   PROCESSING
```

12

┌─────────────────────────────────┐
│ HOST VEHICLE                     │
│ INFORMATION                      │
│ GATHERING UNIT                   │
│ POSITION, SPEED,                 │
│ STEERING ANGLE,                  │
│ ETC.                             │
└─────────────────────────────────┘

※USED FOR DATA
GATHERING

┌──────────────────────────────────────────────────────┐
│ MODEL SELECTION UNIT                                  │
│ (SELECTION ACCORDING TO POSTURE          ~13          │
│ AND BEHAVIOR OF PEDESTRIAN)                            │
└──────────────────────────────────────────────────────┘

┌──────────────────────────────────────────────────────┐
│                      14          14a(14)              │
│ ┌─────────────────┐ ┌─────────────────────┐          │
│ │ MODEL UPDATE    │ │ SHORT-TERM          │          │
│ │ DETERMINATION   │ │ UPDATE              │          │
│ │ UNIT            │ │ DETERMINATION       │          │
│ │                 │ │ UNIT                │          │
│ └─────────────────┘ ├─────────────────────┤          │
│                     │ LONG-TERM           │          │
│     14b(14)         │ UPDATE              │          │
│                     │ DETERMINATION       │          │
│                     │ UNIT                │          │
│                     └─────────────────────┘          │
└──────────────────────────────────────────────────────┘

12

┌─────────────────────────────────┐
│ HOST VEHICLE                     │
│ INFORMATION                      │
│ GATHERING UNIT                   │
│ POSITION, SPEED,                 │
│ STEERING ANGLE,                  │
│ ETC.                             │
└─────────────────────────────────┘

```
                      15
┌──────────────────────────────────────┐
│ MODEL                                 │◄───
│ DETERMINATION UNIT                    │
└──────────────────────────────────────┘
```

START
ASSISTANCE ⇩

┌──────────────────────────────────────────────────────┐
│                      16          16a(16)             │
│ ┌─────────────────┐ ┌─────────────────────┐          │
│ │ DRIVING         │ │ SIDE PASSAGE        │          │
│ │ BEHAVIOR        │ │ DISTANCE            │          │
│ │ PREDICTION      │ │ PREDICTION UNIT     │          │
│ │ UNIT            │ ├─────────────────────┤          │
│ │                 │ │ DECELERATION        │          │
│ │    16b(16)      │ │ RATE CALCULATION    │          │
│ │                 │ │ UNIT                │          │
│ └─────────────────┘ └─────────────────────┘          │
└──────────────────────────────────────────────────────┘

┌──────────────────────────────────────────────────────┐
│ DRIVING BEHAVIOR PREDICTION                           │
│ DETERMINATION UNIT (CALCULATE          ~17            │
│ DEVIATION FROM REFERENCE)                             │
└──────────────────────────────────────────────────────┘

```
                  18              19                    30
┌──────────────────────────────────────────┐    ┌──────────────┐
│ ┌─────────────────┐ ┌───────────────────┐│    │ ALERTING     │
│ │ ASSISTANCE      │ │ ALERTING          ││───▶│ DEVICE       │
│ │ DETERMINATION   │ │ ASSISTANCE UNIT   ││    └──────────────┘
│ │ UNIT            │ ├───────────────────┤│
│ │                 │ │ VEHICLE CONTROL   ││
│ │                 │ │ ASSISTANCE UNIT   ││
│ │            20   │ │                   ││
│ └─────────────────┘ └───────────────────┘│
└──────────────────────────────────────────┘
```

# F I G . 4

NERVOUS DRIVING MODEL

# F I G . 5

STANDARD DRIVING MODEL

# FIG.6

RELAXED DRIVING MODEL

DECELERATION RATE (%)

L3   T3

H3

S3 REFERENCE REGION

HIGH RISK REGION R3

1

PREDICTED SIDE
PASSAGE DISTANCE (m)

# FIG.7

41

W

42

Pw

100

40

# FIG.8

REFERENCE
MEASUREMENT          MEASUREMENT
TRIGGER      100      TRIGGER
P1                    P0

42                                        RELATIVE
                                          DISTANCE TO
0                                         OBJECT (m)

                    MEASURE HOST
              YES   VEHICLE SPEED V0
MEASURE MINIMUM HOST  ⇐
VEHICLE SPEED V1      Vmin ≤ V0 ≤ Vmax

                         ⇓ NO

                    DO NOT MEASURE V1

# FIG.9

Vmin          Vmax

                              VEHICLE SPEED
      SUBJECT                 REGION OF
      VEHICLE SPEED           HOST VEHICLE
      REGION                  (Km/h)
0                      100

# F I G . 10

# FIG.11

```
        ┌─────────────────────────┐
        │   MODEL SELECTED BY      │
        │   MODEL SELECTION UNIT   │
        └─────────────────────────┘
```

※DEFINE SHORT-TERM UPDATE,
  LONG-TERM UPDATE BY SPECIFIED NUMBER
  OF SAMPLES OR SPECIFIED PERIOD

```
┌──────────────────────────────────┐
│      CALCULATE COMPATIBILITY      │
│   (CALCULATE COMPATIBILITY WITH   │
│  MODEL BASED ON ACTUAL RESULTS    │──S201
│  OF SPECIFIED NUMBER OF SAMPLES   │
│   OR SAMPLES OBTAINED WITHIN      │
│        SPECIFIED PERIOD)          │
└──────────────────────────────────┘
```

S202

```
            ◇ COMPATIBILITY ◇
           EQUALS OR EXCEEDS          NO
           CERTAIN VALUE          ──────────┐
          (80%, FOR EXAMPLE)?               │
```

YES     S203

```
┌──────────────────────────┐        S204
│    DRIVING BEHAVIOR       │   ┌──────────────────────┐
│  PREDICTION PROCESSING    │   │ SHIFT TO MODEL HAVING │
└──────────────────────────┘   │  REDUCED RISK REGION  │
                               │ WITHIN POSSIBLE RANGE │
        ┌────────┐             └──────────────────────┘
        │  END   │
        └────────┘
```

20

# FIG.12

COMPATIBILITY 75%

DECELERATION RATE (%)

T2

S2

R2

PREDICTED SIDE
PASSAGE DISTANCE (m)

# FIG.13

NERVOUS
DRIVING MODEL

STANDARD
DRIVING MODEL

RELAXED
DRIVING MODEL

R1

R2

R3

SHIFT

NERVOUS
DRIVING MODEL

STANDARD
DRIVING MODEL

RELAXED
DRIVING MODEL

R11

R21

R31

# FIG. 14

# F I G . 15

| | | ORIENTATION OF PEDESTRIAN | |
|---|---|---|---|
| | | HOST VEHICLE LANE SIDE | OUTSIDE |
| LATERAL DISTANCE TO PEDESTRIAN | WITHIN FIXED DISTANCE | $\frac{5}{5}$ | $\frac{3}{5}$ |
| | OUTSIDE FIXED DISTANCE | $\frac{3}{5}$ | $\frac{4}{5}$ |

# F I G . 16

DECELERATION RATE (%)

100

T4

S4

R4

0

PREDICTED SIDE PASSAGE DISTANCE (m)

# F I G . 17

EARLY

OPERATION TIMING

LATE

T5

S5

R5

PREDICTED SIDE PASSAGE DISTANCE (m)

## INTERNATIONAL SEARCH REPORT

| International application No. |
|---|
| PCT/JP2011/071689 |

A. CLASSIFICATION OF SUBJECT MATTER
*G08G1/16*(2006.01)i, *B60R21/00*(2006.01)i, *B60R21/01*(2006.01)i

According to International Patent Classification (IPC) or to both national classification and IPC

B. FIELDS SEARCHED

Minimum documentation searched (classification system followed by classification symbols)
G08G1/16, B60R21/00, B60R21/01

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-213699 A (Toyota Motor Corp.), 18 September 2008 (18.09.2008), paragraphs [0012] to [0016], [0049] to [0055], [0065] to [0069]; fig. 1 to 5 (Family: none) | 1-2 |
| Y | JP 2005-524900 A (Robert Bosch GmbH), 18 August 2005 (18.08.2005), paragraphs [0007], [0049] & US 2006/0041381 A1 & EP 1506431 A & WO 2003/096068 A1 & DE 10257842 A & DE 10393062 D & AU 2003240406 A & AU 2003240406 A1 | 1-2 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 November, 2011 (25.11.11) | 06 December, 2011 (06.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/071689 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-253745 A  (Nissan Motor Co., Ltd.), 04 October 2007 (04.10.2007), paragraphs [0033] to [0035], [0060] to [0066], [0092] to [0094]; fig. 1 to 14 & US 2010/0235035 A1    & EP 2006181 A2 & WO 2007/108429 A1    & CN 101405174 A | 1-5 |
| A | JP 2005-122263 A  (Nissan Motor Co., Ltd.), 12 May 2005 (12.05.2005), paragraphs [0010] to [0017], [0022] to [0026], [0032] to [0034]; fig. 1 to 10 (Family: none) | 1-5 |
| A | JP 2001-301484 A  (Fujitsu Ltd.), 31 October 2001 (31.10.2001), paragraphs [0062] to [0130]; fig. 1 to 6 (Family: none) | 1-5 |

Form PCT/ISA/210 (continuation of second sheet) (July 2009)

**EP 2 759 996 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005196590 A